# EUROPÄISCHE PATENTANMELDUNG

(11) **EP 3 032 520 A1**
(43) Veröffentlichungstag der Anmeldung: **15.06.2016**
(21) Anmeldenummer: 15199286.4
(22) Anmeldetag: 10.12.2015
(51) Int. Cl.: G09B 1/06, G09B 19/00, G09B 17/00

(54) **LESEKASTEN MIT FEDERELEMENT**

(30) Priorität: 10.12.2014 DE 102014018298
(71) Anmelder: Hahn, Matthäus, 84032 Pfettrach-Altdorf (DE)
(72) Erfinder: Fenzl, Sonja, 84032 Altdorf (DE)
(74) Vertreter: Schwarz und Baldus Patentanwälte

(57) **Zusammenfassung**

Die vorliegende Erfindung betrifft eine Schreib-, Lese- und Rechenlernvorrichtung, insbesondere einen Setzkasten (K) aus Kunststoff mit einer Setztafel (T), die in einem Betriebszustand aufklappbar und zum Einsetzen von beschrifteten Setzelementen (SE) bestimmt ist und im Transportzustand geklappt und in den Setzkasten (K) eingelegt werden kann. Der Setzkasten (K) umfasst des weiteren ein Vorratselement (V), das mit einem Spritzgiessverfahren aus Kunststoff hergestellt ist und einstückig mit dem Setzkasten (K) ausgebildet ist, wobei das Vorratselement (V) mehrere reihenförmige Lagerungsabschnitte (L) aufweist, die zur Lagerung der beschrifteten Setzelemente (SE) dienen und wobei mehrere unterschiedlich beschriftete Setzelemente (SE) in einem reihenförmigen Lagerungsabschnitt (L) bereitgestellt werden, die jeweils durch Abstandselemente (A) in einzelne Kompartments (KF) voneinander getrennt sind. Das Vorratselement (V) umfasst für jeden der reihenförmigen Lagerungsabschnitte (L) jeweils ein Federelement (F), das dazu dient, die Setzelemente (SE) in ihrem Kompartment (KF) in dem reihenförmigen Lagerungsabschnitt (L) herausfallsicher zu lagern.

## Beschreibung

Die Erfindung bezieht sich auf eine Lern- und Lehreinrichtung zum Erlernen des Schreibens, Lesens und Rechnens mit Hilfe eines Setzkastens. Der Setzkasten ist ein flacher Quader, der in eine geöffnete Stellung (Betriebsstellung) geklappt werden kann, in der er als Tragekonstruktion für eine herausnehmbare Setztafel dient. In einem Transportzustand hat er die Form einer Box, eines geschlossenen Behälters oder einer Schachtel und kann mit einer Verriegelungsvorrichtung vor dem unbeabsichtigten Öffnen gesichert werden. Im Transportzustand sind darin die Setztafel und eine Vielzahl von Aufbewahrungsfächern zugänglich, in denen jeweils mehrere beschriftete Setzelemente (z.B. mit Buchstaben und/oder Ziffern, Satzzeichen oder Rechenzeichen) gelagert sind.

Lesekästen sind im Stand der Technik bekannt. Die Anmelderin entwickelt und vertreibt seit über 50 Jahren Lesekästen, die pädagogisch erprobt und durch Erfahrungswissen ständig weiterentwickelt wurden.

Der im Stand der Technik bekannte Lesekasten besteht aus einer Setztafel aus Pappe, einem Aufbewahrungs- oder Setzkasten, in den eine Tragekonstruktion aus Holz für einen Lesekasteneinsatz (ebenfalls aus Holz) eingebaut ist. Der Lesekasteneinsatz dient zur Lagerung von einer Vielzahl von Setzelementen (Buchstaben, Zahlen und/oder Satzzeichen), die als folierte Kärtchen bereitgestellt sind. Um einen möglichst effizienten Such- und Findevorgang verwirklichen zu können, sind die Setzelemente je nach Beschriftung in unterschiedliche Kompartments einsortiert, in denen sie herausfallsicher gelagert sind. Um eine übersichtliche und sortierte Aufbewahrung der unterschiedlichen Setzelemente zu gewährleisten, ist im bekannten Lesekasten insbesondere eine Tragekonstruktion vorgesehen, die aus Holz hergestellt ist und mehrere separate Bauteile umfasst, die zur Herstellung des Setzkastens verarbeitet und in mehreren Arbeitsschritten von Hand montiert werden müssen. Um die einzelnen Kompartments, in denen die Setzelemente gelagert sind voneinander unterscheidbar zu machen, ist ein Holzaufsatz vorgesehen, der schablonenartig in der Form eines Gitterfächers ausgebildet ist und auf den ein Beschriftungsblatt aufgeklebt wird. Vor der Montage des Holzaufsatzes müssen die einzelnen Federelemente montiert werden. Dazu wird ein Federelement in eine Nut der Tragekonstruktion eingesetzt. Erst anschließend kann der Holzaufsatz montiert werden.

Ein Lesekasten nach dem Stand der Technik ist aus der DE 841 815 bekannt. Der Lesekasten umfasst einen Behälter. Dieser dient zur Aufnahme der Setztafel aus Pappe, einem Lesekasteneinsatz, der als Tragekonstruktion dient für mehrere Einzelelemente, die in zusammengebauten Zustand mehrere Vorratsfächer bilden, in denen die Setzelemente gelagert sind. Weiterhin sind mehrere Federn vorgesehen, um die Setzelemente in ihren Vorratsfächern zu lagern. Die Tragekonstruktion muss aus mehreren Bauteilen in mehreren Schritten verbaut werden.

So besteht der Lesekasteneinsatz aus dem Stand der Technik aus einer Anzahl von Querleisten (aus Holz), die durch seitliche Verbindungsstege miteinander verbunden sind. Die zwischen den Querleisten sich ergebenden Zwischenräume dienen zur Aufbewahrung der Buchstabenkärtchen bzw. Setzelemente. Im Stand der Technik sind in Einschnitten der Querleisten federnde Zungen eingesetzt, die sich an die Kärtchen anlegen und sie in der Ruhelage festhalten. Als kostenintensiv und nachteilig hat es sich erwiesen, dass das Vorratselement im Stand der Technik mehrere Bauteile aufweist, die zur Montage verbunden werden müssen, wie eine separate Grundplatte, einzelne Querleisten, Seitenträger, Abstandselemente. Inbesondere das Ineinandergreifen von spezifischen Federzungen und Abstandselementen erfordert viel Handarbeit. Diesen Nachteil überwindet die vorliegende Erfindung.

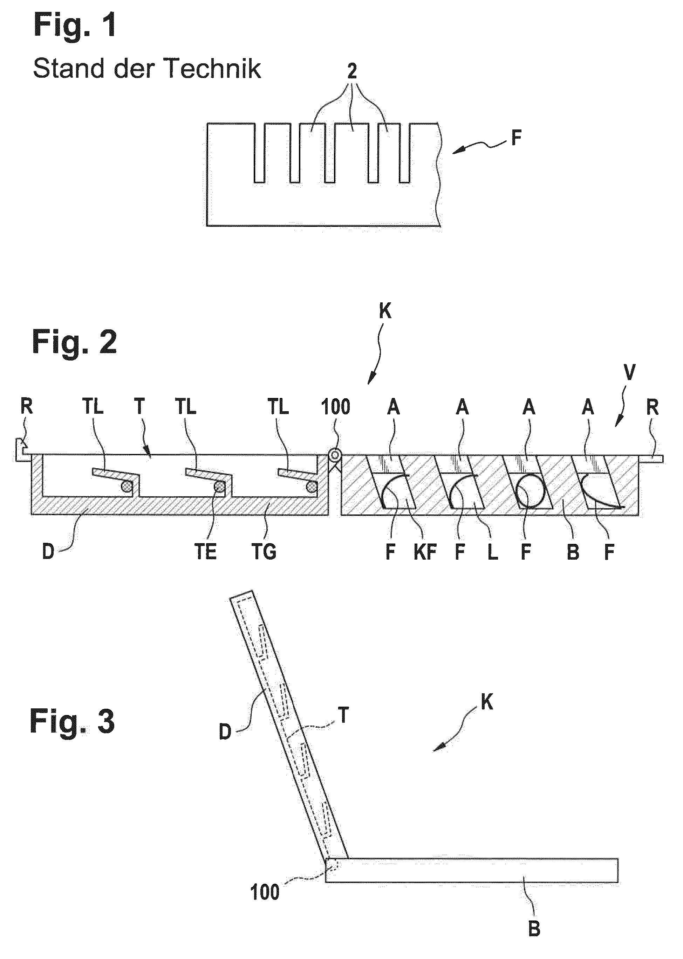

Figur 1 zeigt ein Federzungenelement F gemäß dem Stand der Technik in einer Draufsicht. Dort sieht man die kammartigen Aussparungen der Federzungen 2. Diese Einkerbungen bzw. Aussparungen sind konstruktiv erforderlich, um einen Eingriff mit dem Abstandselementen gewährleisten zu können, die zwischen den Querleisten in jeweils einem rechten Winkel eingesetzt sind und sich über die gesamte Höhe der Querleisten erstrecken. Um das Abstandselement, das als Kunststoffplättchen ausgebildet ist, bei der Montage jeweils in seine Position zwischen den Querleisten einzusetzen, sind in den Querleisten Nuten vorgesehen, in die die Abstandselemente von oben oder von unten eingesteckt werden. Die Abstandselemente haben die Form eines Parallelogramms.

Bei Gebrauch bzw. in einem Betriebszustand kann die Setztafel dachförmig in den Deckel des Kastens gestellt und in einer Nut der oberen Leiste des Lesekastens verankert werden. Vorteilhaft ist, dass die eingeordneten Buchstaben - auch bei einer Lageänderung oder bei Umkippen der Setztafel - weder aus dem Kasten noch aus der Setztafel fallen können.

Durch die Lagerung der Setztafel im Setzkasten im Transportzustand, kann der Lern- oder Spielzustand zu jedem Zeitpunkt "gespeichert" werden, indem der Lesekasten einfach mit eingelegter und gesetzter Setztafel (mit gesetzten Setzelementen) geschlossen wird.

Der im Stand der Technik bekannte Setzkasten ist nachteiligerweise in der Herstellung sehr kostenintensiv, da viele manuelle Verarbeitungsschritte notwendig sind. So ist es z.B. notwendig, die einzelnen Setzelemente in ihrem Kompartment in einer in den Setzkasten eingesetzten separaten Tragekonstruktion vor dem Herausfallen zu sichern. Dazu müssen die Federelemente vor der Montage mit Einschnitten versehen werden (um die Zungen zu bilden) oder als einzelne Federkärtchen in ein Kompartment von Hand eingesetzt werden. Dies ist zeit- und personalkostenintensiv, was insgesamt die Herstellungskosten in die Höhe treibt.

Die vorliegende Erfindung hat sich zur Aufgabe gestellt, dass der bekannte Lesekasten so konstruiert wird, dass die Herstellungskosten gesenkt werden können. Insbesondere sollen die Anzahl der zu montierenden Einzelbauelemente reduziert werden. Des Weiteren soll das Material verändert werden, um eine vereinfachte Herstellung und Montage des Lesekastens zu ermöglichen.

Diese Aufgabe wird durch die beiliegenden Patentansprüche gelöst und insbesondere durch eine Schreib-, Lese- und Rechenlernvorrichtung und ein entsprechendes Herstellungsverfahren.

Die Erfindung betrifft insbesondere eine Schreib-, Lese- und Rechenlernvorrichtung, umfassend:
- Einen Setzkasten aus Kunststoff, der in einem geöffneten Betriebszustand und in einem geschlossenen Transportzustand betrieben werden kann.
- Eine Setztafel, die im Betriebszustand aufgeklappt und zum Einsetzen von beschrifteten Setzelementen bestimmt ist und im Transportzustand in eine annährend zwei-dimensionale (rechteckige) Form geklappt und in den Setzkasten eingelegt werden kann
- Einen (aus modularen Bauteilen zu montierenden) Grundkörper, der während der Herstellung in einem Bodenelement des Setzkastens befestigt wird, mit:
   - Einem einstückigen Vorratselement an dem mehrere Lagerungsabschnitte ausgebildet sind, die jeweils reihenförmig im Vorratselement vorgesehen sind und zur Lagerung der beschrifteten Setzelemente dienen und wobei mehrere unterschiedlich beschriftete Setzelemente in jeweils einem Lagerungsabschnitt bereitgestellt werden, und wobei ein Lagerungsabschnitt jeweils durch Abstandselemente in einzelne Kompartments zur Aufnahme der unterschiedlichen Setzelemente unterteilt wird,
   - einem gitterförmigen Aufsatz, wobei die Abstandselemente einstückig mit dem gitterförmigen Aufsatz ausgebildet sind
   - mit Federelementen, wobei das Vorratselement für jeden der Lagerungsabschnitte jeweils ein Federelement umfasst, das dazu dient, die Setzelemente in ihrem Kompartment in dem Lagerungsabschnitt herausfallsicher zu lagern.

Die Federelemente können im nicht eingebauten Zustand in der Draufsicht eine nicht unterbrochene Außenkontur (also ohne Einschnitte) aufweisen und seitlich in das Vorratselement eingeschoben werden (z.B. in eine Nut). Bevorzugt weisen die Federelemente eine lippenartige Form mit Einschnitten in der Außenkontur auf, wobei die Einschnitte alle dieselbe Breit und Tiefe haben. Dies hat den technischen Vorteil, dass ein und dasselbe Federelement für alle Lagerungsabschnitte verwendet werden kann. Damit können Herstellungskosten gesenkt werden.

In einer bevorzugten Variante ist das Vorratselement nicht aus Kunststoff sondern aus Holz hergestellt, insbesondere aus einer Mehrschicht-Holzverbundplatte. Die Holzplatte wird entlang ihrer Längsachse mehrfach von oben eingefräst, so dass Lagerungsabschnitte entstehen. Die Fräsungen lassen noch einen unteren Rest der Platte von ca. 2 - 3 mm stehen, der als Boden des Vorratselementes dient. Das Vorratselement kann während der Herstellung in dem Bodenelement befestigt werden (z.B. durch Verkleben). Alternativ oder kumulativ kann es einfach nur als separates Bauteil in das Bodenelement eingesetzt werden, z.B. mittels einer Klickverbindung.

In dem Vorratselement werden durch Ausfräsungen mehrere und insbesondere fünf Lagerungsabschnitte zur Aufnahme und Lagerung der Setzelemente bzw. der Buchstabenkärtchen gebildet. Das Vorratselement selbst ist somit aus einem Stück (Holz) gefertigt und somit einstückig. Die Lagerungsabschnitte umfassen jeweils in einer Reihe liegende durch Abstandselemente getrennte Kompartments für die unterschiedlichen Typen der Buchstabenkärtchen (ein Komparment für den Buchstaben "a" und ein nächstes Kompartment für den Buchstaben "b" etc.). Die Abstandselemente dienen dazu, dass die benachbarten Buchstabenkärtchen nicht durcheinanderfallen können und auch bei Bewegung des Lesekastens sortiert bleiben. Ein wichtiger Aspekt der Erfindung ist darin zu sehen, dass die Abstandselemente nicht mehr in dem Vorratselement oder als separates Bauteil bereitgestellt werden, sondern dass sie in dem gitterförmigen Aufsatz ausgebildet sind, der währen der Montage auf dem Vorratselement befestigt wird (z.B. genagelt durch entsprechende Vorbohrungen, die in dem Aufsatz ausgebildet sind).

Die Federelemente sind für den einfachen Betrieb des Setz- bzw. Lesekastens wichtig, da sie die Setzelemente vor dem Herausrutschen sichern und somit eine gewisse Struktur und Gliederung möglich ist. Die vorliegende Erfindung basiert in diesem Zusammenhang auf der Idee, das Federelement in Verbindung mit dem Lesekasten so zu konstruieren, dass eine möglichst einfache und kostenreduzierte Montage und Herstellung des Setzkastens möglich ist. Insbesondere sollen die manuellen Arbeits- und Montageschritte zum Einsetzen der einzelnen Zungen der Federelemente in die Kompartments vermieden werden.

Das Federelement kann - je nach Ausführungsform - in der Draufsicht eine umfangsgeschlossene, nicht unterbrochene Außenkontur bzw. Außenkante aufweisen, wie z.B. bei einem Rechteck. Alternativ und bevorzugt kann das Federelement auch an einer Längskante quer zur Längskante eingeschnitten sein und so mehrere zungenförmige oder lippenförmigen Abschnitte bilden. Dabei dienen die Lippen zum Eingriff mit den Abstandselementen. Die Breite der jeweiligen zungenförmigen Abschnitte ist dabei bei allen Zungen eines jeweiligen Lagerungsabschnittes gleich. Darüber hinaus ist auch die Breite aller Zungen bei den Federelementen für die unterschiedlichen Lagerungsabschnitte gleich. Dies hat den Vorteil, dass nur ein Werkzeug bei der Herstellung aller (fünf) Federelemente für ein Vorratselement erforderlich ist und somit eine deutliche Kosteneinsparung erzielt werden kann.

Das Federelement soll vorzugsweise in allen Lagerungsabschnitten integriert sein, die jeweils reihenförmig im Vorratselement vorgesehen sind. Vorzugsweise sind jeweils identische Federelemente für jeden der reihenförmigen Lagerungsabschnitte vorgesehen, was die Kosten und den Herstellungsaufwand reduziert.

Das Federelement kann gemäß bevorzugten Ausführungsformen als Schlauch (z.B. aus einem silikonartigem Material als Vollmaterial) oder als Hohlprofil oder auch als Federblatt ausgebildet sein. Gemäß einem Aspekt der Erfindung weist das Federelement in der Draufsicht und vor der Montage im Vorratselement eine umfangsgeschlossene rechteckige Form auf. Bevorzugt ist der Umfang nicht unterbrochen durch Einkerbungen oder Ausschnitte oder Zungenbildungen. Das Federelement kann aus einem Kunststoff, insbesondere einer harten PVC-Folie, einem Papier mit Kunststoffüberzug oder Metall hergestellt sein.

Gemäß einem Aspekt der Erfindung wird das jeweilige Federelement bei Montage zur Herstellung der Vorrichtung von unten oder oben oder seitlich in das Vorratselement eingeschoben oder eingelegt. Das Einsetzen von oben ist einfach und durch die modulare Konstruktion des Grundkörpers mit dem separaten gitterförmigen Aufsatz möglich, der sozusagen als Rahmengerüst bei Montage der Vorrichtung zum Setzkasten verbunden (z.B. verklebt, befestigt) wird, nachdem die Federelemente eingesetzt worden sind. Alternativ und auch bevorzugt, kann ein seitliches Einsetzen (Einschieben über die gesamte Länge des Lagerungsabschnitts) der Federelemente vorgesehen sein. Bevorzugterweise umfasst das Vorratselement keine separaten Seitenwände und kein separates Bodenteil. Die Fräsung erstreckt sich über die gesamte Länge des Vorratselementes, so dass in einer Seitenansicht auf das Vorratselement Vertiefungen zwischen den Querleisten entstehen, die die Lagerungsabschnitte bilden.

Gemäß einem Aspekt hat das Federelement einen kreisförmigen Querschnitt. Es kann auch rotationssymmetrisch sein. Vorzugsweise weist das Federelement einen in der Draufsicht im nicht-montierten Zustand geschlossenen Umfang auf. Es ist somit ohne Einkerbungen und ohne Zungen oder Ausschnitte ausgebildet. Das Federelement kann als Federblatt ausgebildet sein, das im nicht-montierten Zustand eine rechteckige Form und im montierten Zustand (eingesetzt in den reihenförmigen Lagerungsabschnitten) eine gewölbte Form aufweist. Das Federblatt kann aus Kunststoff oder Metall hergestellt sein. Das Federelement weist eine Länge auf, die im Wesentlichen der Länge des jeweiligen reihenförmigen Lagerungsabschnittes und damit der Länge des Setzkastens entspricht. Vorzugsweise erstreckt sich das Federelement im eingebauten Zustand in etwa in der unteren Hälfte des Lagerungsabschnittes und weist somit eine Höhe auf, die in etwa der Hälfte der Höhe des Lagerungsabschnittes und damit des Setzkastens entspricht. Das Federelement kann an zumindest einer Längskante eine Falzung aufweisen, um die Federspannung des Federelementes im Lagerungsabschnitt zu gewährleisten und um die Aufnahme der Setzelemente zu vereinfachen. Dabei sollte der Biegeradius der Feder in eingebautem Zustand so gewählt sein, dass ein ausreichender Anpressdruck des Setzelementes auf eine rückwärtige Wand des Lagerungsabschnittes ausgeübt wird. Darüber hinaus kann das Federelement auch zwei (z.B. gegenläufige) Falzungen an den Längskanten aufweisen, um den Einbau des Federelementes in eine Nut im Lagerungsabschnitt zu vereinfachen. In der bevorzugten Ausführung der Erfindung ist das Federelement (vor)gebogen und abgekantet, so dass ein oberer Abschnitt auf das Vorratselement aufgelegt und ein unterer Abschnitt in die Kompartmentfächer der Lagerungsabschnitte eingreifen kann.

Alternativ kann es als dreidimensionaler Federkörper (z.B. schlauchförmig) ausgebildet sein. Dabei kann der dreidimensionale Körper einen kreisförmigen Querschnitt aufweisen und aus Hohl- oder Vollmaterial (z.B. Silikon) hergestellt sein. Das Federelement kann somit im nicht eingebauten Zustand eine zweidimensionale (Federblatt) oder dreidimensionale Form (schlauchförmig) haben.

Gemäß einem Aspekt der Erfindung ist das Federelement zumindest im nicht-eingebauten Zustand in der Draufsicht symmetrisch zu einer Mittellängssache des Federelementes. Dies birgt den Vorteil, dass es leicht herzustellen ist und, dass die Feder insbesondere nicht nachbehandelt werden muss, indem Einkerbungen oder Einschnitte an bestimmten Positionen ausgebildet werden müssen.

Gemäß einem Aspekt kann das Federelement auch lippenförmig ausgebildet und zum Eingriff mit jeweils einem der reihenförmigen Lagerungsabschnitte bestimmt sein, indem es in eine Nut eingreift, die an einer jeweiligen Vorderwand des reihenförmigen Lagerungsabschnitts vorgesehen ist und wobei sich das Federelement mit seiner gegenüberliegenden Seite (also der Seite, die der zum Nuteingriff bestimmten Seite gegenüberliegt) an einer Rückwand desselben reihenförmigen Lagerungsabschnitts abstützt. Die Abstützung des Federelementes an der Rückwand kann unten und am Boden des Lagerungsabschnittes oder höher, z.B. im mittleren Bereich - in hälftiger Höhe - des abstandselement-freien Bereiches des Lagerungsabschnitts ausgebildet sein.

In einer bevorzugten Ausführungsform der Erfindung hat das Federelement einen rechteckigen Umriss, wobei die Länge in etwa der Länge des Vorratselementes oder der Länge (in der Längsachse) der Schreib-, Lese- und Rechenlernvorrichtung, die im Folgenden auch kurz als "Setzkasten" bezeichnet wird, entspricht und die Breite in etwa 1 cm bis 3 cm und bevorzugt ca. 2cm, beträgt. Das Federelement weist in einem Bereich, der sich über die gesamte Länge des Federelementes erstreckt, Einschnitte auf, die sich nicht über die gesamte Breite des Federelementes, sondern nur über ca. ein Drittel bis ein Viertel der Breite des Federelementes erstrecken. Die Einschnitte dienen im eingebauten Zustand zum Eingriff mit Abstandselementen. Das Federelement ist vorzugsweise aus einer transparenten Kunststofffolie (z.B. PVC-Folie) hergestellt und weist eine Dicke von ca. 1 mm auf, so dass das Federelement leicht biegbar ist und zur Montage in eine Nut eines Trägerelementes eingeführt und dann um seine Längsachse gebogen werden kann.

In einer bevorzugten Ausführungsform der Erfindung wird die Schreib-, Lese- und Rechenlernvorrichtung bzw. der "Setzkasten" modulartig hergestellt und umfasst in nicht verbautem Zustand mehrere, separate Bauteile. Im eingebauten oder montierten Zustand sind diese Bauteile integriert und/oder verbunden. Dies hat den Vorteil, dass die Herstellungs- und insbesondere die Montagekosten deutlich gesenkt werden können.

Dazu wird ein modularer Grundkörper des Setzkastens bereitgestellt, der sozusagen das Innenleben des Setzkastens darstellt. Der Grundkörper wird zur Herstellung in ein Bodenelement des Setzkastens (also den der Setztafel gegenüberliegenden Teil) eingebaut. Der Grundkörper umfasst:
1. das einstückige Vorratselement (die Holzschichtplatte) mit den Ausfräsungen und den damit entstandenen Querleisten, wobei vorteilhafterweise keine separate Seitenwand und kein Bodenelement sein müssen.
2. die Federelemente (vorzugsweise als Kunststofffolie) die für alle Lagerungsabschnitte des Setzkastens übereinstimmend ausgebildet sind und von oben oder seitlich in das Vorratselement eingeschoben oder eingelegt werden; die Anzahl der Federelemente entspricht der Anzahl der Lagerungsabschnitte im Vorratselement und beträgt vorzugsweise 5.
3. Einen gitterförmigen Aufsatz, vorzugsweise aus Kunststoff, der Beschriftungen für die einzelnen Kompartments trägt und ebenfalls die Abstandselemente umfasst.

Zumindest diese separaten Bauteile werden zur Montage durch eine einfache Steckverbindung befestigt. In einer bevorzugten Ausführung der Erfindung werden ausschließlich diese drei Bauteile zur Montage des Setzkastens verbaut. Das Innenleben des Setzkastens, also der modulare Grundkörper, wird slso durch die drei folgenden Bauteile gebildet: das Vorratselement, in dessen Lagerungsabschnitte die Federelemente eingelegt werden und auf dem der gitterförmige Aufsatz befestigt wird und damit die Federelemente im Vorratselement fixiert. Der so entstandenen Grundkörper kann dann im Bodenelement befestigt werden (z.B. verklebt).

Im Vorratselement des Setzkastens sind somit mehrere, insbesondere 5, Querleisten, vorzugsweise aus Holz, ausgebildet, in die eine entsprechende Anzahl (5) von einzelnen, separaten Federelementen, vorzugsweise aus Kunststoff, eingreifen sowie eine Gitterplatte, die als Kunststoffplatte ausgebildet ist oder aus einem anderen Material hergestellt ist und auf der Oberseite des Vorratselementes befestigt wird (z.B. mittels einer Klickverbindung, Vernagelung oder Klebeverbindung) und Beschriftungen für die Buchstaben oder Schriftzeichen in den Kompartments enthält.

In einer anderen Ausführungsform der Erfindung kann das Vorratselement auch einstückig mit dem Setzkasten ausgebildet sein oder in diesen eingesetzt und befestigt werden. Das Vorratselement hat einen annährend rechteckigen Umriss. Das Vorratselement kann Querleisten umfassen, die parallel zur Längsachse des Vorratselementes verlaufen. Das Vorratselement kann aus Kunststoff oder Holz gefertigt sein.

Die Querleisten des Vorratselementes können eine Nut entlang ihrer Längsachse aufweisen, in die das Federelement eingeschoben wird (seitlich oder von vorn gesteckt). Die Nut dient somit zur Aufnahme der folienartigen Federelemente. Dementsprechend stimmt die Anzahl der Querleisten und der Federelemente überein und beträgt vorzugsweise 5. Zur Montage wird zunächst das jeweilige Federelement in dem jeweiligen Lagerungsabschnitt befestigt (z.B. eingeschoben in die Nut). Daraufhin wird der Aufsatz auf dem Vorratselement bzw. insbesondere an dessen Querleisten befestigt. Dies erfolgt vorzugsweise durch eine Steckverbindung oder über eine Nagel- oder Klebeverbindung. Die Steckverbindung ist vorzugsweise an allen oder ausgewählten (z.B. den äußeren) parallelen Querleisten des Vorratselementes im jeweils oberen Bereich ausgebildet. Weiterhin wird das Federelement so positioniert, dass sich dessen unteres freies Ende des Federelementes entlang seiner Längsachse in dem Kompartmentfach abstützt, so dass das Federelement in eingebautem Zustand in etwa in einem Winkel von 90° gebogen ist.

Die Gitterplatte, die als Aufsatz dient, kann auf dem Vorratselement verklebt werden oder durch eine Steckverbindung mit dem Vorratselement lösbar oder nicht lösbar verbunden werden. Vorzugsweise ist diese Verbindung nicht lösbar ausgebildet, um eine Demontage des Setzkastens in seine einzelnen Module sicher zu vermeiden. Der gitterförmige Aufsatz ist aus Kunststoff gefertigt und umfasst die Abstandselemente und die Beschriftungen der Kompartments. Die modulare Konstruktion des Grundkörpers hat den Vorteil, dass auch bei unterschiedlichen Konfigurationen des Lesekastens (andere Sprache, andere Schrift, anstatt Schrift Symbole etc.) ein und dieselbe Grundkonstruktion verwendet werden kann, also dasselbe Bodenelement, Deckelement, dasselbe Vorratselement und dieselben Federelemente. Nur der gitterförmige Aufsatz muß angepasst werden, was zu einer enormen Senkung der Herstellungskosten führt. Die Gitterplatte bzw. der gitterförmige Aufsatz erstreckt sich über den gesamten Flächenbereich des Vorratselementes und weist eine rechteckförmige Draufsicht auf. Die Höhe beträgt ca. 1 bis 3 mm. In einer bevorzugten Ausführung der Erfindung ist der gitterförmige Aufsatz mit den Abstandselementen einstückig und insbesondere aus Kunststoff hergestellt. Zur Montage muss dann nur noch das Federelement, vorzugsweise von oben, in die Lagerungsabschnitte eingesetzt und darauf der gitterförmige Aufsatz aufgesetzt und verbunden werden. Der so entstandene Grundkörper kann dann in dem Bodenelement befestigt werden. In einer weiteren, bevorzugten Ausführung der Erfindung weist der als dünnes Kunststoffgitter ausgebildete Aufsatz ein bedrucktes Alphabet auf und dient damit als Sortierhilfe für die einzelnen Kompartments der Lagerungsabschnitte. Dies hat den Vorteil, dass der Setzkasten ohne weitere Umrüstmaßnahmen im Fertigungsvorgang leicht und unkompliziert von einem ersten Setzkastentyp (Lesekasten) auf einen anderen, zweiten Typ (Rechenkasten) oder von einer ersten Sprache (deutsch) in eine andere, zweite Sprache (englisch) oder von einem ersten Alphabet (lateinisch) in ein zweites Alphabet (arabisch, chinesisch) umgerüstet werden kann.

In einer bevorzugten Ausführungsform der Erfindung wird das Federelement bei der Montage von oben eingesetzt. Das Federelement kollidiert nicht mit den Abstandselementen, da diese nur in einem oberen Bereich des Vorratselementes, nämlich nur in der Höhe des gitterförmigen Aufsatzes, ausgebildet sind. Der untere Bereich ist durchgehend und erstreckt sich über die gesamte Länge der Querleiste bzw. des Vorratselementes.

Gemäß einer bevorzugten Ausführungsform der Erfindung greift das Vorratselement im montieren Zustand ein in mehrere Abstandselemente in einem Lagerungsabschnitt. Dabei sind die Abstandselemente annähernd rechtwinklig zu den Lagerungsabschnitten ausgebildet und dienen dazu, einzelne Kompartments für die Buchstabenkärtchen eines Typs (Buchstabe oder Zahl) zu bilden, um so eine Sortierung der Buchstabenkärtchen zu ermöglichen.

Gemäß einem Aspekt greifen in das Vorratselement der Schreib-, Lese- und Rechenlernvorrichtung im montierten Zustand Abstandselemente ein, die werkstoffeinstückig mit dem gitterförmigen Aufsatz ausgebildet sind (einstückig und aus demselben Werkstoff und in einem Herstellungsvorgang, insbesondere mit einem Spritzgussverfahren). Die Abstandselemente weisen die Form eines Parallelogramms auf, dessen Höhe niedriger ist als die Höhe des Vorratselementes und insbesondere die Hälfte der Höhe des Vorratselementes misst. Die Abstandselemente sind im eingebauten Zustand in einem oberen Bereich der Lagerungsabschnitte vorgesehen, um ein einfaches Einsetzen der Setzelemente zu gewährleisten. Die Abstandselemente weisen alle übereinstimmend eine Breite auf, die der Breite des schmalsten Lagerungsabschnittes entspricht. Die Dicke (in der Draufsicht: die Breite der Abstandsstege) soll möglichst gering sein und möglichst unter 1 mm Wandstärke liegen, und insbesondere ca. 0,5mm betragen.

Gemäß einer bevorzugten Ausführung der Erfindung sind die Abstandselemente also nur in einem oberen Bereich vorgesehen, insbesondere in einer oberen Hälfte oder in einem oberen Drittel des Vorratselementes (bezogen auf eine Seitenansicht auf das Vorratselement).

Gemäß einer vorteilhaften Weiterbildung der Erfindung umfasst der Setzkasten ein Deckelement und das Bodenelement, wobei das Deckelement und das Bodenelement durch ein Scharnier von dem geschlossenen Transportzustand in den geöffneten Betriebszustand bewegt werden können und umgekehrt.

Ein weiterer wichtiger Aspekt der vorliegenden Erfindung bezieht sich auf die neuartige Konstruktion der Setztafel, die mit der neuartigen Konstruktion des Setzkastens und insbesondere der Bauteile des Vorratselementes synergistisch zusammenwirkt, indem bei gleichbleibender Qualität eine einfache Bauweise und eine kostenreduzierte Herstellung der Vorrichtung ermöglicht wird. Die Qualität schlägt sich vor allem in der Bedienbarkeit nieder. Dabei ist es wichtig, dass die Setzelemente einfach aus ihren Kompartments herausgenommen und wieder eingesetzt werden können. Dasselbe gilt für das Setzen in der Setztafel. Dabei sollen die positionierten Setzelemente verrutsch- und herausfallsicher gelagert sein.

Die Setztafel kann klappbar oder faltbar oder als eine Platte ausgebildet sein, die in ein Deckelement des Setzkastens integriert sein kann. Die Setztafel ist vorzugsweise aus Kunststoff hergestellt. Die Setztafel kann in ein Deckelement des Setzkastens integriert sein. Die Setztafel ist insbesondere einstückig mit dem Deckelement des Setzkastens ausgebildet. Die Setztafel ist derart konstruiert, dass sie zur Verwendung in einer Schreib-, Lese- und Rechenlernvorrichtung, wie vorstehend beschrieben, ausgelegt ist. Sie kann aus Kunststoff hergestellt sein. Insbesondere kann sie aus einem amorphen thermoplastischen Kunststoff, z.B. einem HartKunststoff oder einer Hart-PVC Folie hergestellt werden. Alternativ können hier Spritzgiess- oder andere Kunststoff-Thermoverfahren, insbesondere ein Single-Sheet oder Twin-Sheet Verfahren, zum Einsatz kommen.

Die Setztafel kann vorteilhafterweise einstückig mit dem Setzkasten ausgebildet sein, indem sie als eine innere Seite des Deckelementes ausgebildet ist. Alternativ kann sie als separates Bauteil in den Kasten eingelegt und aufgestellt werden oder von einem Deckelement des Setzkastens (unter anderem auch durch mehrere Gelenkverbindungen, also mehrfach) abklappbar befestigt sein. Dies hat den Vorteil, dass die Größe der Setztafel variiert werden kann und insbesondere größer als die Außenumrisse des Setzkastens in zusammengekapptem Transportzustand (bzw. als des Deckelementes) sein kann.

Die Setztafel weist zumindest ein annähernd rechteckiges Grundteil auf, auf dem mehrere parallel angeordnete, horizontal verlaufende Halteleisten vorgesehen sind, die zur Aufnahme der Setzelemente bestimmt sind und eine nach oben geöffnete Einstecköffnung aufweisen, in die das Setzelement im Betrieb eingesetzt wird.

Um die Herstellungskosten weiter zu reduzieren, können die Setztafel und die Halteleisten einstückig ausgebildet sind; sie können insbesondere werkstoffeinstückig hergestellt sein, und somit aus einem Stück und zusätzlich aus demselben Material (z.B. Kunststoff) hergestellt sein.

Die vorstehend genannte Aufgabe wird auch gelöst durch eine Setztafel, bei der in alle oder ausgewählte Halteleisten ein Halteelement in die Einstecköffnung der Halteleiste eingebracht ist. Das Halteelement kann eine dreidimensionale Form haben und insbesondere schlauförmig ausgebildet sein. Das Halteelement wird vorzugsweise in einem unteren Ende der Einstecköffnung befestigt, zum Beispiel durch Verklebung oder Thermoverschweißung. Das Halteelement hat den technischen Vorteil, dass die im Betrieb eingesetzten Setzelemente rutsch- und verschiebesicher in der Halteleiste gelagert werden können und zudem leicht ein- und ausschiebbar sind. Dazu weist ist das Halteelement aus einem Material hergestellt, das eine geeignete Viskosität aufweist (z.B. Silikon, Schaum/Foam, Schaumstoffe, z.B. Plastazote, Moosgummi, Dichtungslippen im Miniformat oder ein gummiertes Material).

In einer alternativen Ausbildung der Setztafel wird die Funktion der Halteleiste und die Funktion der Halteelemente von einem einzigen kombinierten Bauteil übernommen, nämlich von einem Haltefederelement, das an das Grundteil der Setztafel befestigt wird. Das Grundteil weist somit mehrere parallel verlaufende Haltefederelemente auf, die an diesem nicht-lösbar durch geeignete Verbindungen befestigt sind (z.B. verpresst, verklebt, thermoverformt und/oder mittels Klebschweißverfahren).

Die vorstehend genannte Aufgabe wird weiterhin gelöst durch ein Herstellungsverfahren zur Herstellung einer Schreib-, Lese- und Rechenlernvorrichtung, bei dem die Federelemente in den jeweiligen reihenförmigen Lagerungsabschnitt seitlich in den Lagerungsabschnitt eingeschoben werden. Bevorzugt ist ein Herstellungsverfahren jedoch, bei dem die Federelemente von oben in das Vorratselement eingesetzt und von dem gitterförmigen Aufsatz fixiert werden. Weiterhin kann es vorgesehen sein, in dem Lagerungsabschnitt eine Nut auszubilden, in die das jeweilige Federelement eingeführt wird. Damit wird der technische Vorteil erreicht, dass das Federelement nicht mehr in einem mehrstufigen Montageverfahren für jedes Kompartment einzeln von unten oder oben eingebracht und anschließend mit einem weiteren Bauteil abgedeckt werden muss. Mit einem über die Länge durchgehenden Federelement können gleichzeitig alle Kompartments des jeweiligen Lagerungsabschnittes versorgt werden. Dies wird möglich, da die Abstandselemente sich nicht über die gesamte Höhe des Lagerungsabschnittes erstrecken. Des Weiteren kann mit der vorliegenden Erfindung der technische Vorteil erzielt werden, dass kein separates Bodenteil, wie im Stand der Technik, notwendig und erforderlich ist. Das Bodenteil kann gemäß der vorliegenden Erfindung somit in dem Vorratselement und einstückig mit diesem ausgebildet sein. Als "Vorratselement" soll hier dasjenige Bauteil bezeichnet werden, das als Tragekonstruktion aus Holz zur Lagerung der Setzelemente bestimmt ist. Im Stand der Technik mit dem bekannten Setzkasten der Firma Hahn e.K. war das Bodenelement aus Kunststoff und die Tragekonstruktion aus Holz ausgebildet. Die Tragekonstruktion umfasste mehrere einzelne Bauteile, wie Leisten und Papieraufkleber, die auf einer Oberseite des Vorratselementes aufgebraucht waren und die einzelnen Abstandselemente, die jeweils für zwei benachbarte Kompartments in eine Nut eingeführt werden mussten, nachdem das zungenaufweisende Federelement in den Lagerungsabschnitt montiert worden ist.

Gemäß einer Ausführungsform der Erfindung kann der Setzkasten als Ganzes oder dessen Bauteile (in der Ausbildung der Erfindung, bei der das Deckelement und das Bodenelement aus zwei separaten Bauteilen gefertigt werden, die über ein Scharnier verbunden sind) in einem Single- oder Twinsheetverfahren hergestellt werden. Insbesondere ist es vorteilhaft, das Deckelement und das Bodenelement in einem Twin-Sheetverfahren zu fertigen. In dieser Ausbildung kann das Verbindungsscharnier entfallen und durch eine Kunststoffverbindung ausgebildet werden.

Gemäß einem weiteren Aspekt betrifft die Erfindung eine Schreib-, Lese- und Rechenlernvorrichtung, umfassend:
- Einen Setzkasten aus Kunststoff, der in einem geöffneten Betriebszustand und in einem geschlossenen Transportzustand betrieben werden kann.
- Eine Setztafel, die im Betriebszustand aufgeklappt und zum Einsetzen von beschrifteten Setzelementen bestimmt ist und im Transportzustand in eine annährend zwei-dimensionale (rechteckige) Form geklappt und in den Setzkasten eingelegt werden kann
- Ein Vorratselement, das mit einem Spritzgiess- oder Thermoformverfahren aus Kunststoff hergestellt ist und einstückig mit dem Setzkasten ausgebildet ist oder während der Herstellung in einem Bodenelement des Setzkastens befestigt wird,
   o wobei das Vorratselement mehrere reihenförmige Lagerungsabschnitte aufweist, die zur Lagerung von Setzelementen dienen und wobei mehrere unterschiedlich beschriftete Setzelemente in einem reihenförmigen Lagerungsabschnitt bereitgestellt werden, die jeweils durch Abstandselemente in einzelne Kompartments voneinander getrennt oder gegliedert sind, wobei die Abstandselemente einstückig mit dem Vorratselement hergestellt sind
   o wobei das Vorratselement für jeden der reihenförmigen Lagerungsabschnitte jeweils ein Federelement umfasst, das dazu dient, die Setzelemente in ihrem Kompartment in dem reihenförmigen Lagerungsabschnitt herausfallsicher und positionsfest bzw. rutschsicher zu lagern und wobei das Federelement im nicht eingebauten Zustand in der Draufsicht einen geschlossenen Umfang aufweist.

Gemäß einem weiteren Aspekt betrifft die Erfindung ein Herstellungsverfahren zur Herstellung einer Schreib-, Lese- und Rechenlernvorrichtung, wie oben beschrieben, wobei die Federelemente in den jeweiligen reihenförmigen Lagerungsabschnitt seitlich in eine Nut eingeschoben werden. Alternativ werden die Federelemente von oben in den Lagerungsabschnitt eingelegt, dass ein Bereich des Federelementes auf einer Querleiste aufliegt und sich in einem gegenüberliegenden Bereich im Lagerungsabschnitt abstützt.

In der folgenden detaillierten Figurenbeschreibung werden nicht einschränkend zu verstehende Ausführungsbeispiele mit deren Merkmalen und weiteren Vorteilen anhand der Zeichnung besprochen.

### Kurze Beschreibung der Figuren

- Fig. 1: zeigt ein Federelement nach dem Stand der Technik in der Draufsicht zum Einbau in einen bekannten Lesekasten
- Fig.2: einen Setzkasten in einer Seitenansicht gemäß einer bevorzugten Ausführungsform der Erfindung,
- Fig.3: einen Setzkasten in einer Seitenansicht gemäß einer weiteren, bevorzugten Ausführungsform der Erfindung,
- Fig. 4: eine Teildraufsicht auf einen Vorratselement eines Setzkastens gemäß einer bevorzugten Ausführungsform der Erfindung,
- Fig. 5: einen Querschnitt entlang der Linie V-V in Figur 4,
- Fig. 6: eine Seitenansicht einer Setztafel gemäß einer bevorzugten Ausführungsform der Erfindung,
- Fig. 7: ein Detail einer Halteleiste der Setztafel aus Figur 6, das in Figur 6 mit einem Kreis gekennzeichnet ist,
- Fig. 8: eine alternative Ausbildung einer Setztafel gemäß einer bevorzugten Ausführungsform der Erfindung,
- Fig. 9: eine Draufsicht auf die in Figur 8 dargestellte Setztafel
- Fig. 10: eine Seitenansicht eines Vorratselementes gemäß einer bevorzugten Ausführungsform der Erfindung und
- Fig. 11: eine Draufsicht auf ein Federelement gemäß der Erfindung.

### Detaillierte Beschreibung der Erfindung

In **Figur 2** ist ein Beispiel eines Schreib-, Lese- und Rechenkastens K in aufgeklappten Zustand dargestellt. Er umfasst ein linksseitig dargestelltes Deckelement D und ein rechtsseitig dargestelltes Bodenelement B, die beide durch ein Scharnier 100 verbunden sind, um den Setzkasten K von einem geöffneten Betriebszustand in einen geschlossenen Transportzustand zu überführen. In das Deckelement kann eine Setztafel T integriert oder aufgestellt werden. Das Bodenelement B umfasst ein Vorratselement V, das mit einem Spritzgiessverfahren aus Kunststoff hergestellt ist und einstückig mit dem Setzkasten K ausgebildet ist. Alternativ kann das Vorratselement V auch als separates Bauteil bereitgestellt werden und während der Montage in das Bodenelement B des Setzkastens K befestigt werden. Im Transportzustand klappen Boden- und Deckelement B, D so aufeinander, dass sie einen geschlossenen Quader bilden, der durch eine Verriegelungseinrichtung R vor dem unbeabsichtigten Öffnen gesichert sein kann, die beispielsweise als Schnapp-Rasteinrichtung ausgebildet sein kann.

Das Vorratselement V dient zur Lagerung von einer Vielzahl von Setzelementen SE in sortierter Form. Dazu weist das Vorratselement V reihenförmige Lagerungsabschnitte L auf, in deren Vertiefungen die Setzelemente SE gelagert sind. Die Lagerungsabschnitte L sind parallel angeordnet und durch Abstandselemente A in separate Kompartments KF untergliedert, so dass sich die unterschiedlich beschrifteten Setzelemente SE nicht vermischen können. Jeder Typ von Setzelementen SE mit derselben Beschriftung hat sozusagen sein eigenes Fach oder Kompartment KF, was einen Such- und Findevorgang für die Setzkärtchen SE vereinfacht. Das jeweilige Kompartmentfach KF ist auf einer Oberseite des Vorratselementes V entsprechend beschriftet. Die Beschriftung kann einzeln für jedes Kompartment KF, aber vorzugsweise für alle Kompartments KF eines Lagerungsabschnitt L als reihenförmige Lagerungsabschnittbeschriftung ausgebildet sein. In einer weiteren, bevorzugten Ausführung der Erfindung, ist eine fächerartig ausgebildete Beschriftungsplatte vorgesehen, die auf das Vorratselement V während der Montage aufgebracht wird. Damit kann ein einziges Beschriftungsbauteil für den gesamten Setzkasten K und somit für alle Lagerungsabschnitte L gemeinsam bereitgestellt werden, was wiederum die Montage- und Herstellungskosten spart.

Um die eingelegten und gelagerten Kärtchen SE vor dem Herausrutschen zu sichern ist erfindungsgemäß ein Federelement F vorgesehen, das in den jeweiligen Lagerungsabschnitt L eingreift. Das Federelement F dient dazu, die in dem Lagerungsabschnitt L gelagerten Setzelemente SE an eine Rückwand RW des Lagerungsabschnittes L anzudrücken.

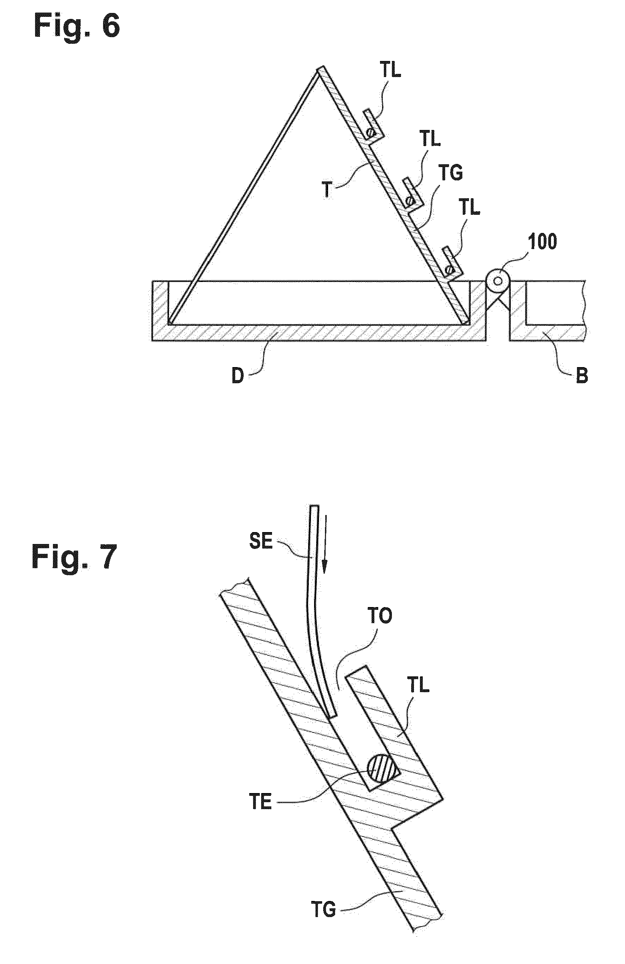

In einer bevorzugten Ausführung der Erfindung kann die Setztafel T unmittelbar in das Deckelement D integriert sein und einstückig mit diesem ausgebildet sein. Dazu weist das Innere des Deckelementes D eine Art Steckeinheit auf, in der die Setzelemente SE eingesetzt werden können. Weiterhin sind Halteleisten vorgesehen, die sich horizontal über das Deckelement erstrecken und eine obere offene Einstecköffnung zum Einsetzen der Setzelemente SE aufweisen. Zwischen einem Grundteil TG der Setztafel (in den Figuren 6 und 7 dargestellt) und den Halteleisten TL entsteht somit ein dünner Spalt oder eine Art Nut, in die im unteren Bereich ein Halteelement HE eingesetzt ist, um die eingesetzten Setzelemente SE ortsfest zu halten und vor dem Herausfallen oder Verrutschen zu sichern. In einer ersten Ausführungsform der Erfindung erstreckt sich die Halteleiste TL in der Seitenansicht in etwa (bis auf Toleranzen unter 1 mm) parallel zum Grundteil TG der Setztafel T. In einer zweiten Ausführungsform der Erfindung und wie auch in Fig. 2 dargestellt, verlaufen die Halteleisten TL nicht parallel, sondern leicht nach vorne geschwenkt, so dass zwischen Grundteil TG und Halteleiste TL ein Winkel eingeschlossen wird in einem Bereich von 10° bis 25° und vorzugsweise von 5°.

In einer weiteren Ausbildung der Erfindung können alle Bauteile des Setzkastens K aus Kunststoff hergestellt werden. Insbesondere können dabei spezielle thermische Umformverfahren für die Kunststoffe zur Anwendung kommen. Gemäß einer Ausführungsform der Erfindung können das Deckelement D und das Bodenelement B auch einstückig mit einer Klappverbindung, insbesondere mit einem Twin-Sheetverfahren hergestellt werden. In dieser Ausbildung kann das Verbindungsscharnier 100 entfallen und durch eine Kunststoffverbindung ausgebildet werden, die während des Umformvorganges als Sollknickkante ausgebildet wird. Alternativ kann auch bei dem Twin-Sheetverfahren das Scharnier 100 zum Einsatz kommen. Bei dem Umformvorgang werden zwei Platten gleichzeitig oder auch direkt nacheinander erwärmt und verformt. Die Besonderheit liegt darin, dass beim Umformen die beiden Platten partiell miteinander verschweißt werden. Dadurch kann ein Hohlkörper oder es können Hohlräume für Einstecköffnungen TO oder andere Öffnungen ausgebildet werden. Durch diese Ausbildung des Herstellungsverfahrens können vorteilhafterweise die Kosten deutlich reduziert werden.

**Figur 3** zeigt einen alternativen Aufbau eines Lesekastens, bei dem der Setzkasten K aus zwei Grundelemente gefertigt wird, die durch ein Scharnier 100 schwenkverbunden sind. Der Setzkasten K umfasst ein Deckelement D und ein Bodenelement B. In das Deckelement D ist die Setztafel T integriert. Vorzugweise ist die Setztafel T einstückig mit dem Deckelement D ausgebildet. In das Bodenelement B ist das Vorratselement V integriert und ebenso vorzugweise zumindest teilweise einstückig mit letzterem ausgebildet. In einem Ausführungsbeispiel ist nur eine der beiden Seitenwände des Bodenelementes B separat ausgebildet und kann nach Montage der Federelemente F in das Vorratselement V (durch seitliches Einführen) unlösbar mit dem Vorratselement V verbunden werden. Im Betriebszustand ist das Deckelement D aufgeklappt und die Setztafel zugänglich; während des Transportzustandes ist das Deckelement D auf das Bodenelement umgeklappt und durch eine Verriegelungseinrichtung R (in Figur 3 nicht dargestellt, jedoch in Figur 2) mit diesem verbunden.

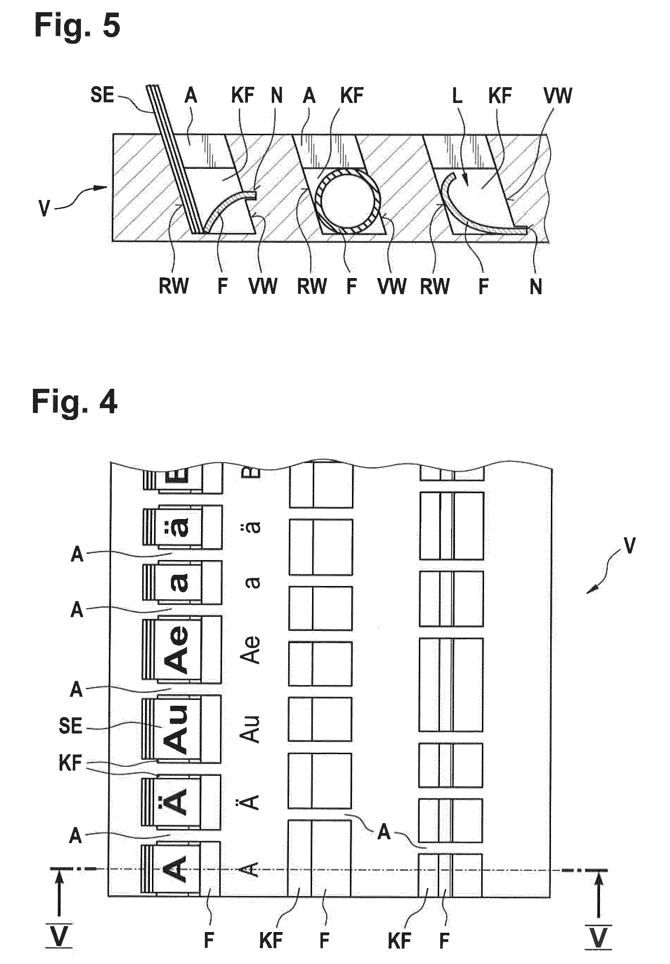

**Figur 4** zeigt einen Teilausschnitt eines Vorratselementes V in der Draufsicht. Der dargestellte Ausschnitt umfasst 3 reihenförmige Lagerungsabschnitte L, die durch die Abstandselemente A in Kompartments KF unterteilt sind. Auf der Oberseite des Vorratselementes V ist in der Draufsicht jeweils oberhalb oder unterhalb des Lagerungsabschnittes L eine Beschriftung für das jeweilige Kompartment KF aufgebracht, um den Suchvorgang zu vereinfachen. Für die Beschriftung kann auch ein separates Bauteil in Form eines Beschriftungsfächers vorgesehen sein. Wie in Figur 4 dargestellt, dienen die Kompartments KF zur Lagerung von einer Vielzahl von Setzelementen SE.

**Figur 5** zeigt einen Querschnitt des Vorratselementes V nach der Linie V-V der Figur 4. Die einzelnen Lagerungsabschnitte weisen einen in der Seitenansicht parallelogrammförmigen Umfang auf und sind nach hinten geneigt, um das Herausnehmen und Einfügen der Setzkärtchen SE zu vereinfachen. Die Setzelemente SE liegen an der Rückwand RW des Kompartments KF an. Die Abstandselemente A sind nicht über die gesamte Höhe des Lagerungsabschnittes L vorgesehen, sondern nur im oberen Bereich. Vorzugweise haben die Abstandselemente A eine Höhe, die der halben Höhe des Lagerungsabschnittes L entspricht. Alternativ können sie auch nur ein Drittel der Höhe betragen. Im unteren und abstandselementfreien Bereich greift das Federelement F in den Lagerungsabschnitt L ein und dient zur Befestigung der gelagerten Setzelemente SE im Vorratselement V. Das Federelement F kann, wie in Figur 5 gezeigt, federblattartig ausgebildet sein und sich in einer Nut N in der Vorderwand VW und gegenüberliegend im unteren Bereich der Rückwand RW abstützen. Alternative Formen des Federelementes F sind in Figur 5 im mittleren und rechten Lagerungsabschnitt L dargestellt. Die Vorderwand VW kann auch eine einer Kontur des Federelementes F entsprechende Ausnehmung aufweisen, in die das Federelement zur Montage dann einfach eingesetzt werden kann (entweder seitlich eingeschoben oder von unten geklickt). Diese Ausführungsform der Erfindung ist in Fig. 5 für den mittleren Lagerungsabschnitt angedeutet. Die Vorderwand kann entsprechend dem Radius des Federelementes F eine Ausnehmung aufweisen mit entsprechendem Radius, so dass das Federelement F nach Montage in die Ausnehmung eingreift.

In Figur 2 sind ebenfalls alternative Arten des Federelementes F dargestellt. Das Federelement F kann auch unterhalb der Vorderwand VW abgestützt sein und sich nach oben in den mittleren oder oberen Bereich der Rückwand RW erstreckend abstützen. Alternativ kann das Federelement F auch einen kreisförmigen Querschnitt aufweisen und z.B. als Schlauch in den Lagerungsabschnitt eingelegt und befestigt (z.B. verklebt) werden.

In **Figur 6** ist eine Ausführungsform einer Setztafel T näher dargestellt. Die Setztafel T umfasst ein Grundteil TG aus Kunststoff, auf dem mehrere parallele und im aufgestellten Zustand der Setztafel T horizontal verlaufende Halteleisten TL aufgesetzt oder angebracht sind. Die Setztafel kann in einer ersten Ausführungsform der Erfindung symmetrisch in der Seitenansicht ausgebildet sein und eine Vorderwand und Rückwand mit jeweils den Halteleisten TL umfassen, die jeweils gleich aufgebaut sind und so ausgebildet sein können, wie in Fig. 6 dargestellt. In einer alternativen Ausführungsform der Erfindung wird die Setztafel nicht symmetrisch ausgebildet, sondern weist nur eine Setzseite mit den Halteleisten auf und die Rückwand ist ohne Halteleisten ausgebildet und hat reine Stützfunktion. Sie kann sich über die gleiche Länge erstrecken, wie die Vorderwand. Alternativ kann nur eine Stütze vorgesehen sein, die sich nicht über die gesamte Länge der Setztafel (in der Draufsicht) erstreckt. Die Stütze hat keine Halteleisten TL.

Im Detail zeigt **Figur 7** den genaueren Aufbau der Setztafel T gemäß einer bevorzugten Ausführungsform der Erfindung. Die Halteleisten TL können einstückig mit der Setztafel T hergestellt sein. Sie dienen zum Bereitstellen einer flachaufbauenden Tragekonstruktion für die einzusetzenden Setzelemente SE. Dazu ist eine Einstecköffnung TO im oberen Bereich der Halteleisten TL vorgesehen. Im unteren Bereich dieser Öffnung TO ist ein Halteelement TE angeordnet und befestigt, das dazu dient, die eingesetzten Setzkarten SE vor dem Herausfallen oder -rutschen zu sichern und in ihrer eingesetzten Position herausnehmbar und vorübergehend zu befestigen bzw. zu positionieren. Dazu kann das Halteelement TE einen kreisförmigen Querschnitt aufweisen und aus einem Material hergestellt sein, das eine rauhe Oberflächenstruktur hat, wie z.B. Gummi oder gummierter Kunststoff oder Silikon oder ähnliche Materialien. Das Halteelement TE stimmt in der bevorzugten Ausführung nicht mit dem Federelement F überein und weist insbesondere einen anderen Durchmesser auf, insbesondere einen größeren Durchmesser, der im Bereich von 4 bis 6 mm liegt. Das Halteelement TE kann auch aus einem anderen Material hergestellt sein und eine andere Form haben als das Federelement F. Die Setztafel T ist vorzugsweise aus weißen Kunststoff hergestellt, um ein möglichst störungsfreies optisches Abscannen der gesetzten Setzelemente SE zu ermöglichen.

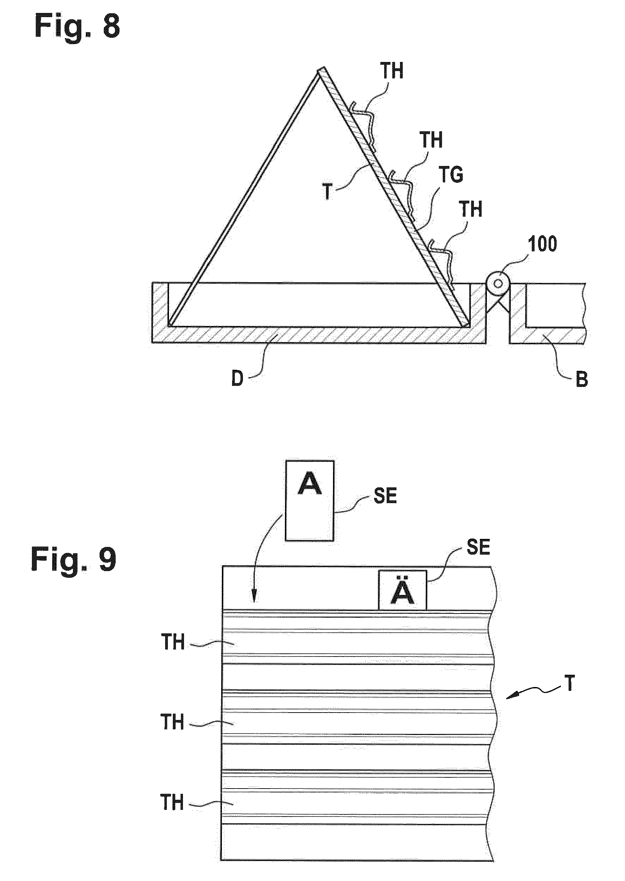

**Figur 8** zeigt ein anderes Ausführungsbeispiel einer Setztafel T, die aus Kunststoff gefertigt ist und die anstelle der Halteleisten TL (der in Figur 7 dargestellten Ausführungsform) Haltefederelemente TH aufweist. Die Haltefederelemente TH dienen zum Einen zur Aufnahme der Setzelemente SE und gleichzeitig zum Anpressen und zum verschiebesicheren Positionieren der eingesetzten Setzelemente SE. Sie können einstückig mit der Setztafel T in einem Kunststoffbearbeitungsverfahren (z.B. Spritzguß- oder Thermoschweißverfahren) hergestellt sein. Andernfalls können die Haltefederelemente TH durch Verklebung oder Verschweißung mit dem Grundteil TG der Setztafel T verbunden werden. Zur Abstützung der Setztafel T kann auch im Bodenelement B im Bereich des Scharniers 100 eine Längsnut ausgebildet sein, in der sich die vordere Seite der Tafel T abstützt, während die hintere Seite, wie in Fig. 8 gezeigt, in einer Innenkante des Deckelementes abgestützt ist.

In **Figur 9** ist eine Draufsicht auf die in Figur 8 dargestellte Setztafel T. Beispielhaft ist die Setzkarte SE mit der Beschriftung "A" und "Ä" dargestellt und wird in die Nut in der Setztafel T eingeschoben, die durch die Haltefederelemente TH gebildet wird. Alternativ können hier die Halteleisten TL aus dem in Figur 6 dargestellten Ausführungsbeispiel verwendet werden.

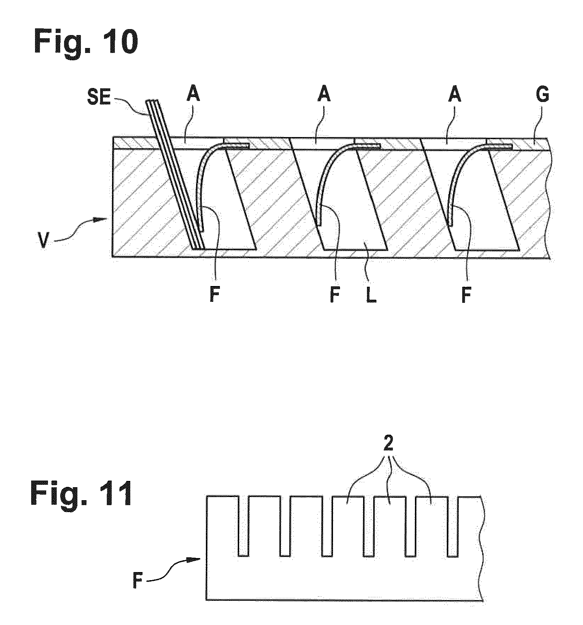

**Figur 10** zeigt eine bevorzugte Ausbildung des Vorratselementes V, das einstückig aus einer Holzschichtplatte hergestellt wird. Die Platte wird durch mehrere (5) Ausfräsungen von Lagerungsabschnitten L entlang der Längsachse zum einstückigen Grundkörper bearbeitet. Im Bereich der Ausfräsungen bzw. der Lagerungsabschnitte L bleibt im Bodenbereich ein Rest von ca. 3 mm bestehen, der eine Art verbindende Grundplatte bildet. In die leicht nach hinten geneigten Lagerungsabschnitte L werden die Federelemente F von oben eingesetzt. Daraufhin wird der gitterförmige Aufsatz G an dem Vorratselement V befestigt und somit fixiert der Aufsatz G auch die Federelemente F im Vorratselement V. Während des Betriebs können dann die Setzelemente SE in die Kompartmentfächer KF herausfallsicher eingesetzt werden. Der gitterförmige Aufsatz G umfasst Querstreben, die hinsichtlich Anzahl und Breite den Querleisten des Vorratselementes V entsprechen, so dass nach Montage die Querstreben des Aufsatzes G deckungsgleich mit den Querleisten des Vorratselementes V sind.

**Figur 11** zeigt ein Federelement F, dessen lippenförmige Abschnitte alle dieselbe Breite haben, so dass zur Herstellung vorzugsweise dasselbe Werkzeug für alle Federelemente F verwendet werden kann.

Abschließend sei darauf hingewiesen, dass die Beschreibung der Erfindung und die Ausführungsbeispiele grundsätzlich nicht einschränkend in Hinblick auf eine bestimmte technische Realisierung der Erfindung zu verstehen sind. Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

Für einen Fachmann ist es insbesondere offensichtlich, dass die Erfindung nicht nur für einen Lesekasten K in einer bestimmten Sprache angewendet werden kann, sondern auch für andere Lernkästen (Rechenkästen etc.) und auch für unterschiedliche Sprachen. Des Weiteren können die Bauteile des Vorratselementes V zu einem integralen Bauteil in einem Herstellungsverfahren hergestellt werden.

### BEZUGSZEICHEN

- K: Setzkasten
- SE: Setzelement bzw. Setzkärtchen
- V: Vorratselement
- D: Deckelement
- B: Bodenelement
- L: Lagerungsabschnitt
- A: Abstandselement
- G: Gitterförmiger Aufsatz
- KF: Kompartment bzw. Kompartmentfach
- F: Federelement
- N: Nut
- VW: Vorderwand
- RW: Rückwand
- 100: Scharnier
- T: Setztafel
- TG: Grundteil der Setztafel
- TL: Halteleisten der Setztafel
- TO: Einstecköffnung der Setztafel
- TE: Halteelement der Setztafel
- TH: Haltefederelemente der Setztafel
- R: Verriegelungsmechanismus

## Patentansprüche

1. Schreib-, Lese- und Rechenlernvorrichtung, umfassend:
- Einen Setzkasten (K) aus Kunststoff
- Eine Setztafel (T), die in einem Betriebszustand aufklappbar und zum Einsetzen von beschrifteten Setzelementen (SE) bestimmt ist und im Transportzustand in eine annährend zweidimensionale Form geklappt und in den Setzkasten (K) eingelegt werden kann
- Einen Grundkörper, der während der Herstellung in einem Bodenelement (B) des Setzkastens (K) befestigt wird, wobei der Grundkörper umfasst:
o ein Vorratselement (V), das einstückig ist und in dem mehrere Lagerungsabschnitte (L) ausgebildet sind;
o einen gitterförmigen Aufsatz (G), wobei Abstandselemente (A) einstückig mit dem gitterförmigen Aufsatz (G) ausgebildet sind und wobei die Abstandselemente (A) im montierten Zustand zum Eingriff mit den Lagerungsabschnitten (L) des Vorratselementes (V) bestimmt sind;
o Federelemente (F), wobei der Grundkörper für jeden der Lagerungsabschnitte (L) jeweils ein Federelement (F) umfasst, das durch den gitterförmigen Aufsatz (G) in dem Grundkörper befestigt wird.

2. Schreib-, Lese- und Rechenlernvorrichtung nach Anspruch 1, bei der das jeweilige Federelement (F) bei Montage zur Herstellung der Vorrichtung seitlich oder von oben in das Vorratselement (V) eingeschoben wird.

3. Schreib-, Lese- und Rechenlernvorrichtung nach einem der vorstehenden Ansprüche, bei der die Lagerungsabschnitte (L) jeweils reihenförmig im Vorratselement (V) vorgesehen sind und zur Lagerung der beschrifteten Setzelemente (SE) dienen und wobei mehrere unterschiedlich beschriftete Setzelemente (SE) in jeweils einem Lagerungsabschnitt (L) bereitgestellt werden, und wobei ein Lagerungsabschnitt (L) jeweils durch Abstandselemente (A) in einzelne Kompartments (KF) unterteilt wird.

4. Schreib-, Lese- und Rechenlernvorrichtung nach einem der vorstehenden Ansprüche, bei der das Federelement (F) einen kreisförmigen Querschnitt hat und rotationssymmetrisch und umfangsgeschlossen ist.

5. Schreib-, Lese- und Rechenlernvorrichtung nach einem der vorstehenden Ansprüche, bei der das Federelement (F) zumindest im nicht-eingebauten Zustand in der Draufsicht symmetrisch zu einer Mittellängssache des Federelementes (F) ist.

6. Schreib-, Lese- und Rechenlernvorrichtung nach einem der vorstehenden Ansprüche, bei der das Federelement (F) lippenförmig ausgebildet und zum Eingriff mit jeweils einem der Lagerungsabschnitte (L) bestimmt ist, indem es in eine Nut (N) eingreift, die an einer jeweiligen Vorderwand (VW) des Lagerungsabschnitts (L) vorgesehen ist und wobei sich das Federelement (F) mit seiner gegenüberliegenden Seite an einer Rückwand (RW) desselben Lagerungsabschnitts (L) abstützt und wobei die Lippen des Federelementes (F) alle dieselbe Breite aufweisen.

7. Schreib-, Lese- und Rechenlernvorrichtung nach einem der vorstehenden Ansprüche, bei der das Federelement (F) im nicht eingebauten Zustand eine zwei- oder dreidimensionale Form hat.

8. Schreib-, Lese- und Rechenlernvorrichtung nach einem der vorstehenden Ansprüche, bei der die Abstandselemente (A) jeweils eine Höhe aufweisen, die niedriger ist als die Höhe des Vorratselementes (V) und insbesondere die Hälfte der Höhe des Vorratselementes (V) aufweisen.

9. Schreib-, Lese- und Rechenlernvorrichtung nach einem der vorstehenden Ansprüche, bei der die Abstandselemente (A) in dem gitterförmigen Aufsatz (G) ausgebildet sind und eine Höhe aufweisen, die einer Höhe des gitterförmigen Aufsatzes (G) entspricht.

10. Schreib-, Lese- und Rechenlernvorrichtung nach einem der vorstehenden Ansprüche, bei der der Setzkasten (K) ein Deckelement (D) und das Bodenelement (B) umfasst, wobei das Deckelement (D) und das Bodenelement (B) durch ein Scharnier (100) von dem geschlossenen Transportzustand in den geöffneten Betriebszustand bewegt werden können und umgekehrt.

11. Schreib-, Lese- und Rechenlernvorrichtung nach einem der vorstehenden Ansprüche, bei der die Setztafel (T) in das Deckelement (D) integriert ist und insbesondere einstückig mit dem Deckelement (D) des Setzkastens (K) ausgebildet ist.

12. Schreib-, Lese- und Rechenlernvorrichtung nach einem der vorstehenden Ansprüche, bei der das Vorratselement (V) aus Holz und insbesondere aus einer Holzschichtplatte hergestellt ist und mehrere Querleisten umfasst, die zum Eingriff mit entsprechenden Querstreben des gitterförmigen Aufsatzes (G) bestimmt sind.

13. Schreib-, Lese- und Rechenlernvorrichtung nach einem der vorstehenden Ansprüche, bei der der gitterförmige Aufsatz die Federelemente (F) im Vorratselement (V) befestigt.

14. Setztafel (T) zur Verwendung in einer Schreib-, Lese- und Rechenlernvorrichtung nach einem der vorstehenden Ansprüche, bei der die Setztafel (T) teilweise oder vollständig aus Kunststoff, insbesondere aus einem amorphen thermoplastischen Kunststoff, hergestellt ist.

15. Setztafel (T) nach dem vorstehenden auf die Setztafel (T) gerichteten Anspruch, bei der die Setztafel (T) einstückig mit dem Setzkasten (K) ausgebildet ist und von einem Deckelement (D) des Setzkastens (K) abklappbar befestigt ist.

16. Setztafel (T) nach einem der vorstehenden auf die Setztafel (T) gerichteten Ansprüche, bei der die Setztafel (T) zumindest ein annähernd rechteckiges Grundteil (TG) umfasst, auf dem mehrere parallel angeordnete, horizontal verlaufende Halteleisten (TL, TH) vorgesehen sind, die zur Aufnahme der Setzelemente (SE) bestimmt sind und eine nach oben geöffnete Einstecköffnung (TO) aufweisen und wobei die Setztafel (T) und die Halteleisten (TL; TH) einstückig ausgebildet sind.

17. Setztafel (T) nach einem der vorstehenden auf die Setztafel (T) gerichteten Ansprüche, bei der in alle oder ausgewählte Halteleisten (TL, TH) der Setztafel (T) ein Halteelement (TE) in die Einstecköffnung (TO) der Halteleiste (TL, TH) eingebracht ist.

18. Setztafel (T) nach einem der vorstehenden auf die Setztafel (T) gerichteten Ansprüche, bei der die Setztafel (T) ein Grundteil (TG) und daran befestigte Haltefederelemente (TH) aufweist.

19. Herstellungsverfahren zur Herstellung einer Schreib-, Lese- und Rechenlernvorrichtung nach einem der vorstehenden Ansprüche, wobei die Federelemente (F) in den jeweiligen Lagerungsabschnitt (L) seitlich in eine Nut (N) eingeschoben oder von oben eingesetzt werden.

20. Grundkörper, der zur Herstellung einer Schreib-, Lese- und Rechenlernvorrichtung nach einem der vorstehenden Ansprüche 1 bis 12, dient und modular aufgebaut ist, umfassend:
- ein Vorratselement (V), das einstückig ist und in dem mehrere Lagerungsabschnitte (L) ausgebildet sind,
- einen gitterförmigen Aufsatz (G), an dem Abstandselemente (A) einstückig ausgebildet sind, wobei die Abstandselemente (A) nach der Montage zum Eingriff mit den jeweiligen Lagerungsabschnitten (L) des Vorratselementes (V) dienen, um Kompartments (KF) zur Lagerung von Setzelementen (SE) zu bilden;
- Federelemente (F), wobei der Grundkörper für jeden der Lagerungsabschnitte (L) jeweils ein Federelement (F) umfasst, das durch den gitterförmigen Aufsatz (G) in dem Grundkörper befestigt wird.
